# EUROPÄISCHE PATENTANMELDUNG

(11) **EP 0 802 275 A1**
(43) Veröffentlichungstag der Anmeldung: **22.10.1997**
(21) Anmeldenummer: 97101747.0
(22) Anmeldetag: 05.02.1997
(51) Int. Cl.: D21C 5/02, D21C 9/147, D21B 1/32

(54) **Verfahren zur Erhöhung des Weissgrades von Papierfaserstoff**

(30) Priorität: 16.04.1996 DE 19614947
(71) Anmelder: Voith Sulzer Stoffaufbereitung GmbH, 88191 Ravensburg (DE)
(72) Erfinder: Gehr, Volker, Dr., 88255 Baienfurt (DE); Selder, Harald, 88281 Schlier (DE)

(57) **Zusammenfassung**

Bei dem vorgeschlagenen Verfahren wird Papierfaserstoff (P), der zumindest teilweise aus bedrucktem Altpapier besteht, mit Wasser (W) suspendiert und sowohl mit Bleich-Hilfsmitteln (CH) als auch Bleich-Chemikalien (OX) vermischt. Die Bleich-Chemikalien (CH) enthalten mit Vorteil molekularen Sauerstoff. Eine intensive mechanische Bearbeitung (2) mit mindestens 20 kWh/to wird vor dem Bleichen (3) vorgenommen, wobei die Bleichdauer mindestens 10 Minuten beträgt und während der Bleiche ein Druck, der über Umgebungsdruck liegt, herrscht. Anschließend wird aus dem gebleichten Stoff der überwiegende Anteil der noch vorhandenen Druckfarbenpartikel entfernt.

## Beschreibung

Die Erfindung bezieht sich auf ein Verfahren zur Erhöhung des Weißgrades von Papierfasern gemäß dem Oberbegriff des Anspruchs 1.

Ein solches Verfahren ist z.B. aus der EP 0 557 651 A1 bekannt. In dieser Publikation findet es bei der Aufbereitung von gemischtem Altpapier Anwendung. Dabei wird das Altpapier unter Verwendung von NaOH und NaOCl aufgelöst und anschließend üblichen, an sich bekannten Reinigungsschritten unterzogen. Nach weiterer Eindickung wird es bei erhöhter Temperatur mit molekularem Sauerstoff und Peroxid behandelt, wobei sauerstoffhaltige Radikale freigesetzt werden. Dadurch werden die an sich bekannten chemischen Umsetzungen veranlaßt, bei denen insbesondere das Lignin von den Fasern gelöst wird. Nach dem Ausblasen aus dem Druckraum wird dann der Stoff ausgewaschen. Das in Lösung gebrachte Lignin wird mit dem Waschwasser entfernt. Mit Hilfe eines solchen Verfahrens kann und soll der Weißgrad des Papierstoffes gesteigert werden, d.h. daß das später daraus erzeugte Papier möglichst weiß sein soll, auch wenn es z.B. aus bedrucktem Altpapier gewonnen wurde.

In der SE 94034949 A wurde ein Verfahren zum Blechen von Sekundärfaserstoff bekanntgemacht. Bei diesem wird das Altpapier zuerst einem ein- oder mehrstufigen Deinkingverfahren unterzogen und später die dabei nicht entfernten Druckfarbenpartikel in einem nachgeschalteten Disperger so weit zerkleinert, daß durch sie das später hergestellte Papier nicht verschlechtert wird. Außerdem dient der Disperger dazu, die Angriffsmöglichkeiten der Bleichmittel auf diese restlichen Farbpartikel zu verstärken. Bei diesem Verfahren ist eine befriedigende Weiße nur dann erreichbar, wenn mit Bleichmitteln gearbeitet wird, deren Art oder Konzentration relativ aggressiv ist, was zu hohen Bleichmittelkosten führt und eventuell die Faserqualität vermindert.

Aus einer anderen Patentschrift, der US 5,211,809, ist ein Altpapierbleichverfahren bekannt, bei dem ebenfalls elementarer Sauerstoff eingesetzt wird. Das Verfahren arbeitet jedoch ausschließlich mit intensiver chemischer Einwirkung auf den Stoff, und zwar einer gezielt herbeigeführten chemischen Reaktion zwischen den enthaltenen Farbstoffen und dem Sauerstoff. In einem rein chemischen Angriff soll also der Weißgrad durch Farbstoffzerstörung gesteigert werden, wobei offenbar hohe Alkalität bevorzugt wird.

Es ist Aufgabe der Erfindung, ein Verfahren zu schaffen, mit dem der Weißgrad beträchtlich gesteigert werden kann. Insbesondere soll die Aufbereitung von bedrucktem, gemischten Altpapier zu weißem und melierungsfreien Papier verbessert werden. Die Ausbeute an Faserstoff soll möglichst hoch und die Abwasserbelastung möglichst niedrig sein.

Diese Aufgabe wird durch die im Kennzeichen genannten Verfahrensschritte gelöst.

Beispiele für oxidierende Bleichchemikalien sind Peroxid, Sauerstoff-Gas und sauerstoffhaltige Luft. Als Bleichhilfsmittel können NaOH, MgSO₄, Na₂Si O₃ dienen. Sowohl Bleichmittel als auch Bleichhilfsmittel werden oft kombiniert eingesetzt, z.B. Peroxid und molekularer Sauerstoff zum Bleichen. Bei Bleichhilfsmittel können stabilisierende Chemikalien wie Na₂Si O₃ zuerst und später NaOH zugesetzt werden.

Die Kombination der intensiven mechanischen Behandlung des Faserstoffes mit oxidierender Bleiche unter den angegebenen Parametern hat sich als besonders vorteilhaft erwiesen. Offenbar wird durch eine solche mechanische Vorbehandlung (ein- oder zweistufig) der Faserstoff optimal für diesen Einsatz von oxidierenden Reagenzien vorbereitet. Die mechanische Vorbehandlung kann auch die Vermischung des Faserstoffes mit den Bleichhilfsmitteln und gegebenenfalls mit den Bleich-Chemikalien verbessern. Durch Kombination von Dispergierung und O₂- bzw. O₂ + Peroxid-Bleiche wird erhöhter Weißgrad und verbesserte Sauberkeit erzielt; insbesondere dann, wenn anschließend Flotation oder Wäsche erfolgt. Daher können Chemikalien eingespart und die Bleichprozeßbedingungen faserschonend eingestellt werden, ohne daß eine ungenügende Weiße in Kauf genommen werden müßte. Auch die Wasserbelastung wird geringer, da weniger gelöste Stoffe aus dem Bleichprozeß bzw. den ihm nachgeschalteten Trennstufen anfallen. Dabei bringt der Einsatz von reinem Sauerstoff ausgezeichnete Ergebnisse, aber auch ein Gasgemisch von Inertgas und Sauerstoff - wie z.B. Luft-, insbesondere unter erhöhtem Druck, kann die gestellte Aufgabe lösen und ist ein besonders wirtschaftlicher Kompromiß. Neben den deutlich geringeren Kosten des Gasgemisches ist bei seiner Verwendung auch die Explosionsgefahr geringer als mit reinem Sauerstoff.

Besonders wirksam bei der Lösung der gestellten Aufgabe ist eine Kombination zweier mechanischer Behandlungsstufen in Verbindung mit der beschriebenen Bleichbehandlung. Durch eine solche Kombination ergibt sich z.B. die Möglichkeit, bei der ersten mechanischen Bearbeitung zunächst die Bleichhilfsmittel zuzumischen, und zwar gerade intensiv genug, um sie gut zu verteilen, ohne daß in diesem Stadium des Verfahrens bereits durch Delignifizierung die Vergilbung von holzschliffhaltigen Bestandteilen des Altpapiers zu befürchten wäre. Nachdem diese Vermischung optimal stattgefunden hat, bietet z.B. die darauffolgende intensive mechanische Bearbeitung die Möglichkeit, gasförmigen Sauerstoff oder ein sauerstoffhaltiges Gas zuzumischen, wobei sich dann sofort und damit optimal die Bleichwirkung entfalten kann.

Die Erfindung und ihre Vorteile werden erläutert anhand von Zeichnungen. Dabei zeigen:
- Fig. 1: grundsätzliches Verfahrensschema der Erfindung;
- Fig. 2 und 3: besondere Ausgestaltungen des erfindungsgemäßen Verfahrens als Verfahrensschemata;
- Fig. 4: ein Anlagenschema.

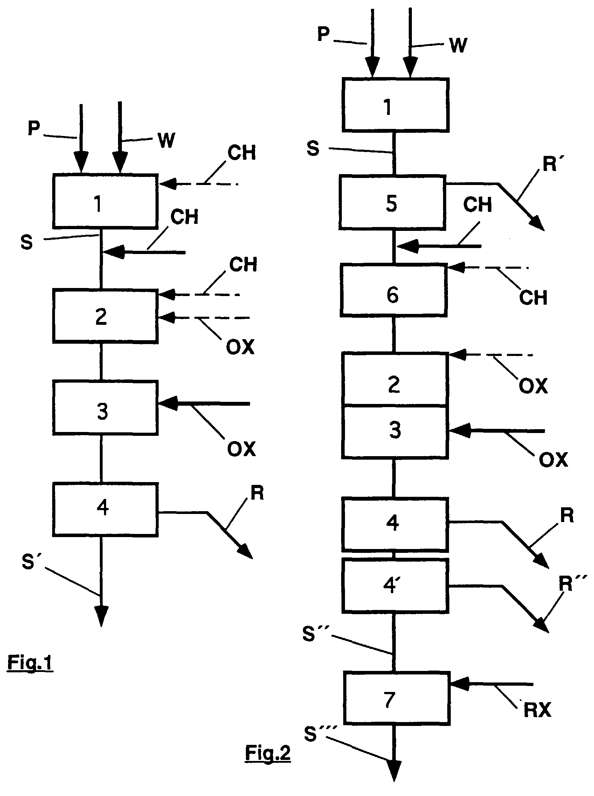

Fig. 1 zeigt zunächst die vier Grundschritte des erfindungsgemäßen Verfahrens, nämlich die Herstellung 1 einer den Papierstoff P und Wasser W enthaltenden Suspension S, die intensive mechanische Bearbeitung 2, das Bleichen 3 sowie die Entfernung 4 des überwiegenden Anteils der von den Fasern abgetrennten Druckfarbenpartikel, also das sogenannte Deinking. Dabei fallen die Druckfarbenpartikel als Rejekt R an und werden aus dem Prozeß entfernt. Bei der intensiven mechanischen Bearbeitung 2 wird eine spezifische Arbeit von mindestens 20 kWh/to übertragen, wozu z.B. ein Hochkonsistenzkneter oder Disperger verwendbar ist. In vielen Fällen ist auch eine höhere spezifische Arbeit, etwa 40 kWh/to von Vorteil. Die Zumischung der Bleichhilfsmittel CH erfolgt am besten vor der intensiven mechanischen Bearbeitung 2, weil so eine sehr gute Einmischung möglich ist. Besonders wirtschaftlich ist ihre Zugabe zum bereits für die mechanische Bearbeitung eingedickten Stoff. Wenn der eingedickte Stoff ohnehin aufgeheizt wird, ist die Zugabe in den heißen Stoff von besonderem Vorteil. Es ist aber ebenso denkbar, die Bleichhilfsmittel bereits bei der Auflösung des Papierstoffs P zuzugeben, um eine längere Verweilzeit zu ermöglichen. Bekanntlich sind einige der als Bleich-Chemikalien verwendbaren Stoffe chemisch nicht sehr stabil, weshalb eine möglichst kurze Zeit zwischen Zugabe und dem eigentlichen Bleichvorgang angestrebt wird. Andererseits ist eine Vermischung der Blech-Chemikalien mit dem Stoff in einer mechanischen Bearbeitungsmaschine besonders wirksam. Hier ist es dem Fachmann überlassen, wo unter Berücksichtigung aller Gesichtspunkte die Zugabe optimal erfolgen soll. Peroxid kann als Bleichmittel z.B. auch vor dem Dispergierprozeß zugegeben werden. Wird dagegen molekularer Sauerstoff verwendet, empfiehlt sich seine Zugabe direkt in die Bleichapparatur, z.B. einen Bleichturm. Ein solcher Bleichturm ist eine Vorrichtung, in der der zu bleichende Stoff mit einer bestimmten Verweilzeit unter Einhaltung der Bleichbedingungen gestapelt wird. Zum Blechen kann sowohl reiner Sauerstoff verwendet werden als auch ein sauerstoffhaltiges Gas, wie z.B. Luft. Die Druck- und Temperaturbedingungen bei der Bleiche 3 richten sich u.a. danach, in welcher Konzentration das Gas vorhanden ist.

Nachdem der Papierstoff bzw. die aus ihm gebildete Suspension diese vier Verfahrensschritte durchlaufen hat, wird sie als gebleichte und gereinigte Suspension S' der weiteren Verarbeitung zugeführt.

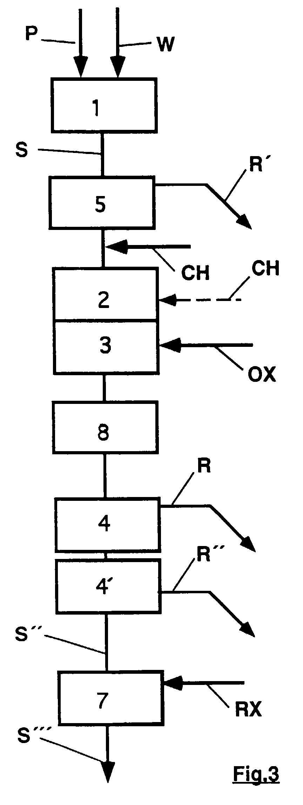

Der wesentliche Unterschied einer in Fig. 2 gezeigten Ausführungsform des Verfahrens gegenüber Fig. 1 liegt darin, daß nach der Herstellung 1 der Suspension S ihre Vorreinigung 5 erfolgt, der sich dann eine zusätzliche mechanische Vorbehandlung 6 anschließt. Diese Vorbehandlung 6 erfolgt mit einer spezifischen Arbeit von mindestens 10 kWh/to und dient im wesentlichen der Homogenisierung des Papierstoffes. Sie geht der eigentlichen intensiven mechanischen Bearbeitung 2 voraus, bei der mindestens 20 kWh/to übertragen werden. Als weiterer Unterschied ist die zweistufige Entfernung 4 und 4' der Druckfarbenpartikel anzusehen. Das können z.B. zwei hintereinander geschaltete Flotationsverfahren sein oder Kombinationen aus Flotation und Wäsche. Bezüglich der Zugabe der Chemikalien gilt im Prinzip das bereits zu Fig. 1 Gesagte. Ferner ist angedeutet, daß aus den Trennstufen 5,4,4' jeweils die Rejekte R, R', R'' abgeführt werden. Die so behandelte Suspension S 2'' kann in einer weiteren, vorzugsweise reduzierenden Bleichbehandlung 7 noch weiter verbessert werden, wozu reduzierende Blech-Chemikalien RX erforderlich sind. Am Ende dieser Stufe liegt in der Suspension S''' ein hochwertiger Papierstoff vor. Selbstverständlich richtet sich der Aufwand für das Verfahren nach den Anforderungen an den Fertigstoff und nach der Qualität des eingetragenen Altpapiers.

In der Variante gemäß Fig. 3 findet nach der Bleiche 3 eine Dispergierbehandlung in einem Disperger 8 statt. Ein solcher Disperger arbeitet bekanntlich mit sehr hohen Scherkräften und kann dadurch den gebleichten Stoff homogenisieren. Für eine nachfolgende Entfernung der Druckfarbenpartikel wird er dadurch sehr gut vorbereitet. Dabei wird genutzt, daß durch die Behandlung beim Blechen 3 die Bindemittel zwischen Farbpartikel und Faser, welche die intensive mechanische Behandlung 2 vor der Bleiche 3 noch überstehen konnten, nunmehr durch einen chemischen Angriff destabilisiert sind. Die Scherkräfte im Disperger sind geeignet, nunmehr auch die ursprünglich besonders gut anhaftenden Farbpartikel von den Fasern zu lösen.

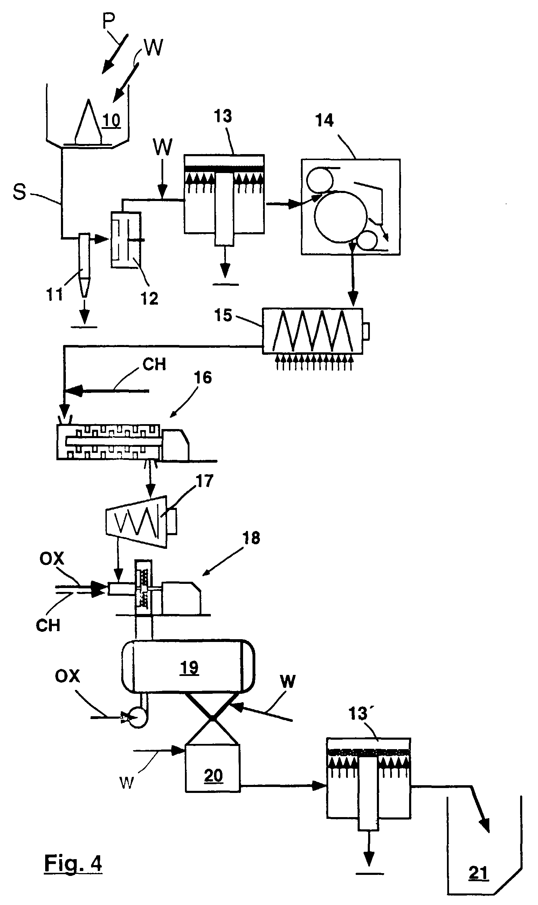

Eine Anlage, wie sie zur Durchführung des erfindungsgemäßen Verfahrens verwendet werden kann, zeigt schematisch die Fig. 4. Papierstoff P und Wasser W werden in einem Hochkonsistenzstofflöser 10 aufgelöst und verdünnt, so daß eine pumpfähige Suspension S entsteht, die anschließend über einen Hydrozyklon 11 und einen Entstipper 12 weiter behandelt wird. Danach wird wiederum Wasser W zugegeben, um die für die Flotationsvorrichtung 13 erforderliche Konsistenz zu erhalten. In der Flotationsvorrichtung 13 werden abgelöste Druckfarben und weitere partikelförmige Verunreinigungen abgeschieden, also ein Deinking-Verfahrensschritt durchgeführt. Der gesäuberte Gutstoff gelangt in eine Eindickvorrichtung 14, in der eine Stoffdichte von mindestens 15 % erreicht wird. Der so erzeugte Hochkonsistenzstoff wird dann in der Heizvorrichtung 15 mit Dampfeinblasung auf die gewünschte Temperatur gebracht und so in einen Kneter 16 eingegeben, der hier eine mechanische Vorbehandlung an dem Papierstoff vornimmt. Die Bleichhilfsmittel CH werden mit Vorteil unmittelbar vor dem Kneter 16 zugemischt. Die hier gezeigte Ausführung des Kneters ist drucklos; daher wird der Stoff anschließend über eine Komprimiervorrichtung 17 in die unter Überdruck stehende Dispergiervorrichtung 18 geführt.
Die Kombination druckloser Kneter 16 und Hochdruck-Dispergiervorrichtung 18 ist zwar aufwendig, aber zur Durchführung des Verfahrens besonders wirksam. In anderen Anlagen kann die mechanische Vorbehandlung im Kneter entfallen. Auch muß die Dispergiervorrichtung 18 nicht unbedingt unter Überdruck stehen. Die Bleich-Chemikalien OX werden hier zumindest teilweise dem Stoff zugegeben, bevor er in die Dispergiervorrichtung 18 gelangt. Unter Umständen kann an dieser Stelle auch zumindest ein Teil der Bleich-Hilfsmittel CH zugemischt werden. Die eigentliche Bleiche findet in dem Bleichgefäß 19 statt. Dieses steht erfindungsgemäß unter Überdruck. Auch in dieses Bleichgefäß 19 kann zumindest ein Teil der Bleich-Chemikalien OX eingegeben werden, was sich besonders anbietet, wenn diese gasförmig sind. Nachdem der Stoff mindestens 10 Minuten im Bleichgefäß 19 verblieben ist, kann er über eine Schleuse in ein Verdünnungsgefäß 20 ausgeblasen werden. Anschließend findet eine weitere Deinking-Flotation in einer Flotationsvorrichtung 13' statt, wobei der Stoff noch einmal von den freigelegten Verunreinigungen durch Flotation gereinigt wird. Danach gelangt er in die Vorratsbütte 21. Wie bereits erwähnt, handelt es sich bei dieser Anlagenbeschreibung lediglich um eine Möglichkeit, das Verfahren auszuführen. Dem Fachmann sind auch andere Apparate bekannt, um die in den Ansprüchen formulierten Verfahrensschritte auszuführen.

## Patentansprüche

1. Verfahren zur Erhöhung des Weißgrades von zumindest teilweise aus bedrucktem Altpapier gewonnenem Papierstoff (P) unter Anwendung folgender Schritte:
1.1 Herstellung (1) einer den Papierstoff (P) und Wasser (W) enthaltenden Suspension (S),
1.2 Zumischung von Bleichhilfsmitteln (CH) zu der Suspension (S),
1.3 Zugabe von Bleich-Chemikalien (OX),
**gekennzeichnet durch**
1.4 intensive mechanische Bearbeitung (2) des Papierstoffes mit einer spezifischen Arbeit von mindestens 20 kWh/to unter folgenden Dispergierbedingungen:
1.4.1 Stoffdichte über 15%,
1.4.2 Stofftemperatur über 40 Grad C,
1.5 Blechen (3) unter Bleichbedingungen, die neben den genannten Dispergierbedingungen
1.5.1 einen Gesamtdruck von über einem bar enthalten sowie
1.5.2 ihre Erhaltung über eine Bleichdauer von mindestens 10 Minuten.
1.6 Nachfolgend Entfernung (4) des überwiegenden Anteils der von den Fasern abgetrennten Druckfarbenpartikel.

2. Verfahren nach Anspruch 1,
**dadurch gekennzeichnet,**
daß zu den Bleichbedingungen ein Feststoffgehalt von 15 - 40 % gehört.

3. Verfahren nach Anspruch 1 oder 2,
**dadurch gekennzeichnet,**
daß bei der intensiven mechanischen Bearbeitung (2) eine spezifische Arbeit von mindestens 40 kWh/to übertragen wird.

4. Verfahren nach Anspruch 1, 2 oder 3,
**dadurch gekennzeichnet,**
daß zu den Bleichbedingungen ein Sauerstoffpartialdruck von mindestens 20 % des Gesamtdruckes gehört.

5. Verfahren nach Anspruch 4,
**dadurch gekennzeichnet,**
daß zu den Bleichbedingungen ein Gesamtdruck von mindestens 2,5 bar gehört.

6. Verfahren nach Anspruch 1,2, 3, 4 oder 5,
**dadurch gekennzeichnet,**
daß zu den Bleichbedingungen ein Sauerstoffpartialdruck von mindestens 90% des Gesamtdruckes gehört.

7. Verfahren nach Anspruch 1,
**dadurch gekennzeichnet,**
daß zu den Bleichbedingungen eine Temperatur von 40 bis 140 Grad C gehört.

8. Verfahren nach Anspruch 1,
**dadurch gekennzeichnet,**
daß zu den Dispergierbedingungen ein Gesamtdruck von über einem bar gehört.

9. Verfahren nach Anspruch 8,
**dadurch gekennzeichnet,**
daß zu den Dispergierbedingungen eine Stofftemperatur von über 100 Grad gehört.

10. Verfahren nach Anspruch 8 oder 9,
**dadurch gekennzeichnet,**
daß zu den Dispergierbedingungen ein Gesamtdruck von mindestens 2,5 bar gehört.

11. Verfahren nach Anspruch 10,
**dadurch gekennzeichnet,**
daß zu den Dispergierbedingungen eine Stofftemperatur von mindestens 120 Grad C gehört.

12. Verfahren nach einem der voranstehenden Ansprüche,
**dadurch gekennzeichnet,**
daß die Dispergierbedingungen im wesentlichen den Bleichbedingungen entsprechen.

13. Verfahren nach Anspruch 12,
**dadurch gekennzeichnet,**
daß sowohl die intensive mechanische Bearbeitung (2) des Papierstoffes als auch das Blechen (3) innerhalb desselben Maschinen-Gehäuses erfolgen.

14. Verfahren nach Anspruch 1,
**dadurch gekennzeichnet,**
daß zur Einstellung und Erhaltung der Bleichbedingungen Luft zugegeben wird, die mindestens 20 % molekularen Sauerstoff enthält.

15. Verfahren nach Anspruch 1,
**dadurch gekennzeichnet,**
daß zur Einstellung und Erhaltung der Bleichbedingungen ein Gas zugegeben wird, das mindestens 90 % molekularen Sauerstoff enthält.

16. Verfahren nach einem der voranstehenden Ansprüche,
**dadurch gekennzeichnet,**
daß ein erster Teil der Bleichchemikalien (OX) zwischen den Schritten Herstellung (1) der Suspension (S) und intensive mechanische Bearbeitung (2) des Papierstoffes zugegeben wird und ein zweiter Teil der Blech-Chemikalien während der Bleiche (3).

17. Verfahren nach Anspruch 16,
**dadurch gekennzeichnet,**
daß der erste Teil der Blech-Chemikalien Peroxid enthält.

18. Verfahren nach Anspruch 16 oder 17,
**dadurch gekennzeichnet,**
daß der zweite Teil der Bleich-Chemikalien gasförmigen Sauerstoff enthält.

19. Verfahren nach Anspruch 1,
**dadurch gekennzeichnet,**
daß die Bleichhilfsmittel (CH) in den bereits auf mindestens 10 % Stoffdichte eingedickten Faserstoff zugegeben werden.

20. Verfahren nach Anspruch 19,
**dadurch gekennzeichnet,**
daß die intensive mechanische Bearbeitung (2) des Papierstoffes in einem Disperger erfolgt und daß Bleichilfsmittel (CH) unmittelbar vor Eintritt des Papierstoffes (P) in die Garnitur zugegeben werden oder innerhalb der Garnitur, so daß der Disperger (8) als Chemikalienmischer wirkt.

21. Verfahren nach Anspruch 1 ,
**dadurch gekennzeichnet,**
daß unmittelbar nach der Herstellung (1) einer den Papierstoff (P) und Wasser (W) enthaltenden Suspension (S) eine Vorreinigung (5) der Suspension mit Mitteln erfolgt, die auf unterschiedlicher Größe, unterschiedlicher Dichte oder unterschiedlicher Benetzbarkeit der Bestandteile basieren.

22. Verfahren nach Anspruch 21 ,
**dadurch gekennzeichnet,**
daß bei der Vorreinigung (5) der Suspension (S) ein Teil der Farbpartikel entfernt wird.

23. Verfahren nach einem der voranstehenden Ansprüche,
**dadurch gekennzeichnet,**
daß eine mechanische Vorbehandlung (6) des Papierstoffes (P) erfolgt, die im Verfahrensablauf vor der intensiven mechanischen Bearbeitung (2) liegt und bei der eine spezifische Arbeit von wenigstens 10 kWh/to übertragen wird.

24. Verfahren nach Anspruch 23 ,
**dadurch gekennzeichnet,**
daß bei oder unmittelbar vor der mechanischen Vorbehandlung (6) Bleichhilfsmittel (CH) zugemischt werden.

25. Verfahren nach Anspruch 21 oder 22,
**dadurch gekennzeichnet,**
daß mechanische Vorbehandlung (6) des Papierstoffes bei etwa Umgebungsdruck erfolgt und die intensive mechanische Bearbeitung (2) bei einem Druck von mindestens 2,5 bar.

26. Verfahren nach Anspruch 1,
**dadurch gekennzeichnet,**
daß eine mechanische Nachbehandlung (8) des Papierstoffes (P) erfolgt, die im Verfahrensablauf nach der intensiven mechanischen Bearbeitung (2) liegt und bei der eine spezifische Arbeit von wenigstens 20 kWh/to übertragen wird.

27. Verfahren nach Anspruch 26,
**dadurch gekennzeichnet,**
daß die intensive mechanische Bearbeitung (2) bei einem Druck von mindestens 2,5 bar und die mechanische Nachbehandlung (8) des Papierstoffes bei etwa Umgebungsdruck erfolgt.

28. Verfahren nach einem der voranstehenden Ansprüche,
**dadurch gekennzeichnet,**
daß die Druckfarbenpartikel nach dem Bleichen (3) durch Deinking-Flotation (4'), bei einer Stoffdichte unter 2,5% entfernt werden.

29. Verfahren nach einem der voranstehenden Ansprüche,
**dadurch gekennzeichnet,**
daß die Druckfarbenpartikel nach dem Blechen (3) zusammen mit einem Teil des Wassers in einer Deinking-Wäsche (4'') aus der Suspension entfernt werden.

30. Verfahren nach einem der voranstehenden Ansprüche,
**dadurch gekennzeichnet,**
daß der Papierstoff nach Entfernung (4) des überwiegenden Anteils der von den Fasern abgetrennten Druckfarbenpartikel mindestens einer weiteren Bleichbehandlung (7, 7') unterzogen wird.

31. Verfahren nach Anspruch 30,
**dadurch gekennzeichnet,**
daß mindestens eine weitere Bleichbehandlung (7, 7') mit reduktiv wirkenden Chemikalien (RX) durchgeführt wird.
